# EUROPÄISCHE PATENTSCHRIFT

(11) **EP 2 546 565 B1**
(45) Veröffentlichungstag und Bekanntmachung des Hinweises auf die Patenterteilung: **13.04.2016**
(21) Anmeldenummer: 12175176.2
(22) Anmeldetag: 05.07.2012
(51) Int. Cl.: F21S 8/02, G02B 6/00, F21V 7/00, F21S 8/04

(54) **Deckenaufhellungsnut**
Ceiling lighting groove
Encoche pour éclairage de plafond

(30) Priorität: 15.07.2011 DE 102011107427
(43) Veröffentlichungstag der Anmeldung: 16.01.2013
(73) Patentinhaber: Siteco Beleuchtungstechnik GmbH, 83301 Traunreut (DE)
(72) Erfinder: Lewers, Christoph, 83379 Wonneberg (DE); Zweiling, Benjamin, 98693 Ilmenau (DE)
(74) Vertreter: Schmidt, Steffen

(56) Entgegenhaltungen:
- EP-A1- 2 221 529
- WO-A2-02/44615
- US-A1- 2010 110 679
- US-B1- 7 334 933

## Beschreibung

Die Erfindung betrifft Leuchten, insbesondere Decken- oder Wandleuchten, welche speziell dafür eingerichtet sind, einen Bereich um die Lichtaustrittsfläche der Leuchte aufzuhellen.

Eine Leuchte der eingangs genannten Art ist z.B. aus der DE 2 121 074 A bekannt. Eine Deckenleuchte, welche als Deckeneinbauleuchte oder Deckenanbauleuchte ausgeführt sein kann, ist an der Lichtaustrittsfläche mit einem Ringreflektor versehen, welcher Licht in Richtung zur Decke umlenkt, um diesen Bereich aufzuhellen.

Ferner sind aus der DE 34 12 889 B4, DE 37 37 324 C2 und DE 36 33 976 A1 Deckeneinbauleuchten bekannt, welche einen ringförmigen Lichtleitkörper oder Lichtstreukörper aufweisen, der ähnlich wie der vorhergehend genannte Ringreflektor die Aufgabe hat, Licht in Richtung zum Umfangsbereich der Deckenleuchte umzulenken.

Die eingangs genannten Leuchten nach dem Stand der Technik besitzen jedoch den Nachteil, dass an der Lichtaustrittsfläche der Leute ein ringförmiges Element vorgesehen ist, welches separat zu den sonstigen Leuchtenbauteilen montiert werden muss und innerhalb der Austrittsöffnung der Leuchte dem Betrachter als separates Bauteil auffällt. Insbesondere werden Reflektoren als dunkle Elemente in der Lichtaustrittsöffnung wahrgenommen.

WO 02/44615 A2 offenbart eine Leuchtenanordnung mit wenigstens zwei einander gegenüberliegenden Randschienen. Die Leuchte, die als Deckeneinbauleuchte ausgebildet sein kann, weist eine transparente Abdeckung auf, die auf der Lichtaustrittsseite mit einer Mikroprismenstruktur versehen ist. Im seitlichen Bereich kann Licht nach wenigstens einer zweimaligen Reflexion an unterschiedlichen Schenkelflächen eines Prisma den Rand der Abdeckscheibe verlassen, um den Bereich neben der Leuchte aufzuhellen.

US 7334933 B1 offenbart eine Beleuchtungseinrichtung, welche eine Oberfläche bereitstellt, die Licht von einer einzelnen, mehreren einzelnen oder einer länglichen Lichtquelle gleichmäßig abgibt. Dazu sind in einer transparenten Lichtverteilungsplatte gegenüber der oder den Lichtquellen Vertiefungen vorgesehen, welche das Licht durch interne Reflektion in der Platte seitlich umlenken.

Aufgabe der vorliegenden Erfindung ist es, eine Leuchtenkonstruktion der eingangs genannten Art bereitzustellen, welche jedoch konstruktiv einfacher zu verwirklichen ist und mit einem in der Lichtaustrittsöffnung einheitlichen Erscheinungsbild für eine Aufhellung des Bereichs um die Leuchte, insbesondere dem direkten Randbereich um die Leuchte, sorgt.

Die Aufgabe wird gelöst durch eine Decken- oder Wandleuchte mit wenigstens einem Leuchtmittel und einer transparenten Abdeckung, welche im Bereich einer Lichtaustrittsöffnung der Leuchte angeordnet ist und einen Umfangsrand aufweist, welcher wenigstens teilweise die seitliche Begrenzung der Lichtaustrittsfläche definiert, wobei auf einer dem Leuchtmittel abgewandten Seite der Abdeckung eine zum Umfangsrand der Abdeckung beabstandete Nut vorgesehen ist, welche wenigstens zwei Schenkelflächen in dem Material der Abdeckung festlegt und wobei eine der Schenkelflächen in einem Querschnitt senkrecht zur Längserstreckung der Nut gegenüber der dem Leuchtmittel zugewandten Oberfläche der Abdeckung einen Neigungswinkel aufweist, der so bemessen ist, dass diese Schenkelfläche Licht, welches von dem Leuchtmittel durch die dem Leuchtmittel zugewandte Oberfläche der Abdeckung auf die Schenkelfläche auftritt, total reflektiert und in Richtung zum Umfangsrand der Abdeckung zur Aufhellung der Umgebung der Leuchte, in welcher die Leuchte eingebaut ist, umlenkt, wobei die Lichtstrahlung nach der Totalreflexion die Abdeckung direkt durch den Umfangsrand verlässt.

Erfindungsgemäß sorgt die Nut in der Abdeckung durch Totalreflexion an einer ihrer Schenkelflächen für eine Umlenkung eines Teils des Lichtes, welches von dem Leuchtmittel in die Abdeckung eintritt, in Richtung zum Umfangsrand der Abdeckung. Dieses Licht kann in unterschiedlichen Austrittswinkeln aus dem Umfangsrand austreten abhängig von der Ausführungsform des Randbereiches. Dadurch lässt sich das Licht in die gewünschte Richtung zur Aufhellung der Umgebung der Leuchte, z.B. in Richtung zur Decke, in welcher die Leuchte eingebaut ist, umlenken. Die Nut der vorzugsweise durchgehenden Abdeckung ist besonders einfach auszuführen, insbesondere bei Leuchten, welche ohnehin eine Abdeckung z.B. als Staubschutz oder als Splitterschutz für die Leuchtmittel aufweisen. Ferner ist die Nut für den Betrachter kaum sichtbar im Unterschied zu separaten Lichtlenkmitteln, wie sie im Stand der Technik üblich sind.

Der Neigungswinkel der Schenkelfläche der Nut, welche für die Totalreflexion sorgt, ist insbesondere von dem Brechungsindex des Materials der Abdeckung abhängig. Ausführungsformen der Leuchte umfassen einen Neigungswinkel zwischen der für die Totalreflexion sorgenden Schenkelfläche und der zu dem Leuchtmittel zugewandten Oberfläche zwischen 21 ° und 72°, bevorzugt zwischen 40° und 50°. Diese Winkel sind insbesondere für Materialien der Abdeckung mit einem Brechungsindex zwischen 1,3 und 1,9, bevorzugt zwischen 1,4 und 1,6, anwendbar.

Gemäß einer bevorzugten Ausführungsform bildet die Nut in dem Querschnitt senkrecht zur dem Leuchtmittel zugewandten Oberfläche der Abdeckung und senkrecht zur Längsstreckung der Nut ein Dreieck. Das Dreieck kann zu der dem Leuchtmittel abgewandten Oberfläche der Abdeckung offen sein. Die Spitze des Dreiecks, welche in Richtung zu dem Leuchtmittel weist, ist vorzugsweise abgerundet. Dadurch lässt sich die Nut einfacher herstellen. Die dreieckförmige Nut ist ausreichend für die Ausführungsformen der Erfindung, da lediglich eine Schenkelfläche benötigt wird, an welcher die Totalreflexion stattfindet. Andere Ausführungsformen können jedoch auch Nuten mit mehr als zwei Schenkelflächen vorsehen, um z.B. eine Lichtlenkung in unterschiedlichen Richtungen zu bewirken.

Gemäß einer bevorzugten Ausführungsform ist die Abdeckung eine ebene Platte. Diese lässt sich besonders einfach herstellen. Gemäß anderen Ausführungsformen kann die Abdeckung auch abgewinkelt ausgeführt werden. Diese Ausführungsform ist bevorzugt, wenn eine verhältnismäßig tiefe Nut gewünscht ist und die Materialstärke der Abdeckung nicht ausreichen würde, um die Nut in einer ebenen Platte auszuführen.

Gemäß einer bevorzugten Ausführungsform verläuft die Nut wenigstens zum Teil entlang des Umfangrandes. In dieser Position kann die Nut effektiv Licht zum Umfangsrand umlenken. Gemäß einer alternativen Ausführungsform kann die Nut auch weiterhin innerhalb der Abdeckung verlaufen. Bei dieser Ausführungsform kann das Licht, welches an der Schenkelfläche der Nut umgelegt wird, in der Art eines Lichtleiters in der Abdeckung bis zum Umfangsrand transportiert werden. Die Nut oder mehrere Nuten können auch diagonal zum Umfangsrand der Abdeckung verlaufen.

Gemäß einer bevorzugten Ausführungsform ist die Schenkelfläche in der Nut, an welcher Licht total reflektiert wird, eben. Dadurch kann die gesamte Schenkelfläche zur Lichtreflexion dienen. Gemäß einer alternativen Ausführungsform kann die Schenkelfläche auch konkav gekrümmt oder konvex gekrümmt sein. Diese Ausführungsformen dienen zum Bündeln bzw. aufweiten des reflektierten Lichtbündels. Als der Neigungswinkel der Schenkelfläche ist bei diesen Ausführungsformen der Winkel gemessen zu einer Tangente der gekrümmten Schenkelfläche zu verstehen. Die gekrümmte Schenkelfläche kann über die gesamte Fläche oder nur über einen Abschnitt dieser Fläche Neigungswinkel aufweisen, welche die Totalreflexion bewirken.

Gemäß einer bevorzugten Ausführungsform ist der Umfangsrand der Abdeckung wenigstens zum Teil eben. Der Umfangsrand kann senkrecht zu einer der Oberflächen der Abdeckung verlaufen oder keilförmig geneigt sein. Dadurch lässt sich der Ausfallswinkel des Lichts aus dem Umfangsrand durch Lichtbrechung beeinflussen. Gemäß weiteren Aufführungsformen ist auch ein konkav gekrümmter oder konvex gekrümmter Umfangsrand möglich. Diese Ausführungsformen dienen zur Fokussierung oder Defokussierung des aus dem Umfangsrand austretenden Lichtbündels. Gemäß weiteren Ausführungsformen sind auch die Umfangsränder mit einer lichtstreuenden Oberflächenbeschichtung oder mit Prismen möglich, um die Eigenschaften des austretenden Lichtbündels zu modifizieren.

Gemäß einer bevorzugten Ausführungsform weist der Umfangsrand mehrere Facetten auf. Die Facetten können eben, konkav gekrümmt oder konvex gekrümmt ausgeführt sein.

Gemäß einer bevorzugten Ausführungsform ist die dem Leuchtmittel zugewandten und/oder die dem Leuchtmittel abgewandte Oberfläche der Abdeckung wenigstens zum Teil mit einer lichtbrechenden Struktur, insbesondere mit Prismen besetzt. Diese Prismen können direkt in den Oberflächen der Abdeckung integriert sein. Alternativ können sie auch als Folie oder als weiterer Platte an der Oberfläche des Abdeckung vorgesehen sein. Die Prismenstruktur kann von den Oberflächen der Abdeckung nach außen weisen, d.h. zur Lichtaustrittsfläche oder zum Leuchtmittel. Bei der Verwendung von Prismenfolien oder Prismenplatten kann die Prismenstruktur auch in Richtung zu der Oberfläche der Abdeckung weisen. Ferner kann vorgesehen sein, die lichtbrechenden Strukturen nur auf ausgewählten Bereichen der Abdeckung auszubilden. Insbesondere können lichtbrechende Strukturen im Bereich der Nut, insbesondere auf der der Nut gegenüberliegenden Oberfläche der Abdeckung, vorgesehen sein.

Gemäß einer bevorzugten Ausführungsform tritt die die Abdeckung durch den Umfangsrand verlassende Lichtstrahlung wenigsten teilweise durch eine Fläche, die der seitlichen Verlängerung der dem Leuchtmittel zugewandten Oberfläche der Abdeckung entspricht, hindurch. Dieser Anteil des Lichts dient bei einer Decken- oder Wandleuchte zur Aufhellung des Decken- oder Wandbereiches, welcher sich neben der Abdeckung befindet. Diese Ausführungsform ist insbesondere für abgehängte Deckenleuchten oder für Wand- oder Deckeneinbauleuchten, deren Abdeckung in einer Ebene vor der Einbaufläche angeordnet ist, bevorzugt.

Die Erfindung stellt ferner eine Abdeckung für eine der Leuchten, wie vorhergehend beschrieben, zur Verfügung. Die Abdeckung weist auf einer Oberfläche eine zu ihrem Umfangsrand beabstandete Nut auf, welche wenigstens zwei Schenkelflächen in dem Material der Abdeckung festlegt, wobei eine der Schenkelflächen in einem Querschnitt senkrecht zu der Längserstreckung der Nut gegenüber der der Nut gegenüberliegenden Oberfläche der Abdeckung einen Neigungswinkel aufweist, der so bemessen ist, dass Licht, welches in die Abdeckung durch die Oberfläche, welche der Nut gegenüberliegt, eintritt und auf die Schenkelflächen auftrifft, total reflektiert wird und in Richtung zum Umfangsrandes der Abdeckung abgelenkt wird.

Weitere Merkmale und Vorteile der vorliegenden Erfindung werden anhand der nachfolgend beschriebenen bevorzugten Ausführungsformen deutlich. In den Figuren ist Folgendes dargestellt:
- Figuren 1a-1f: zeigen verschiedene Abdeckungen von Ausführungsformen einer Leuchte.
- Figur 2: zeigt einen Querschnitt durch einen seitlichen Abschnitt der Abdeckung und der Leuchtmittel einer Ausführungsform einer Leuchte.
- Figuren 3a-3f: zeigen Querschnitte entsprechend der Figur 2 für verschiedene Ausführungsformen mit unterschiedlichen Nuten.
- Figuren 4a-4f: zeigen Querschnitte entsprechend der Figur 2 für verschiedene Ausführungsformen mit unterschiedlichen Randbereichen.
- Figuren 5a und 5b: zeigen Querschnitte entsprechend der Figur 2 für zwei Vergleichsbeispiele mit facettiertem Randbereich.
- Figuren 6a und 6b: zeigen Querschnitte entsprechend der Figur 2 für zweit verschiedene Ausführungsformen mit unterschiedlichen Randbereichen.
- Figuren 7a-7e: zeigen Querschnitte entsprechend der Figur 2 für verschiedene Ausführungsformen mit lichtbrechenden Strukturen an Oberflächen der Abdeckung.
- Figuren 8a-8c: zeigen Querschnitte durch einen mittleren Bereich an einer Abdeckung und der Leuchtmittel für verschiedene Ausführungsformen einer Leuchte.
- Figuren 9a und 9b: zeigen Querschnitte entsprechend der Figur 2 für verschiedene Ausführungsformen mit einer Leuchtstofflampe als Leuchtmittel.

In den Figuren werden jeweils entsprechende Bauteile verschiedener Ausführungsformen mit dem gleichen Bezugszeichen bezeichnet.

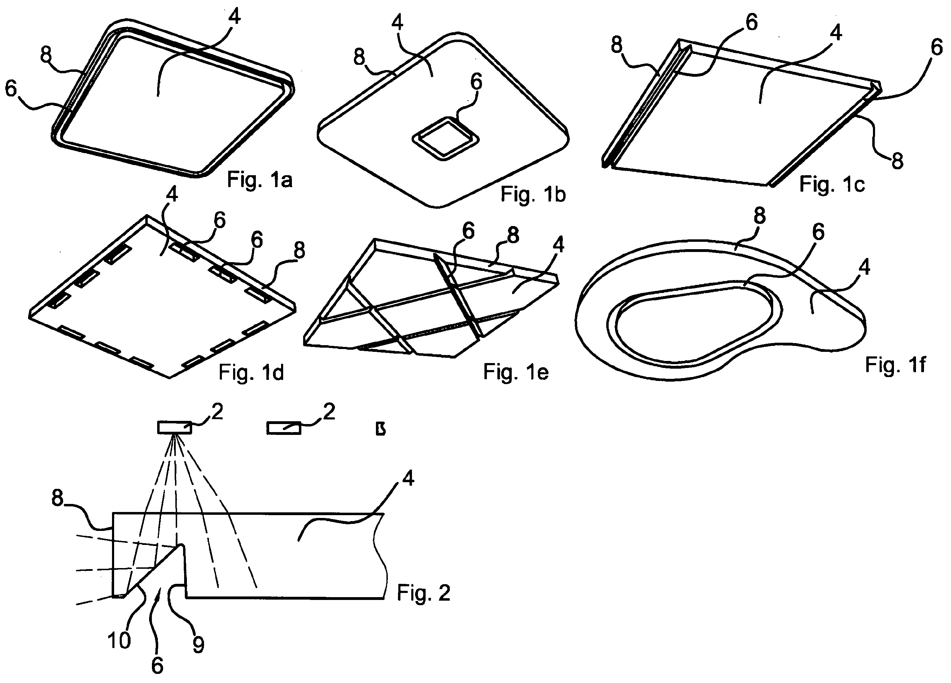

Eine Leuchte der vorliegenden Erfindung ist insbesondere als Deckeneinbau- oder Deckenanbauleuchte oder als Wandeinbau- oder Wandanbauleuchte ausgeführt. Die Leuchte umfasst ein oder mehrere Leuchtmittel, insbesondere eine Anordnung von LEDs 2, die in den Figuren 2 bis 8c schematisch dargestellt sind. Auf der dem Leuchtmittel gegenüberliegenden Seite der Leuchte ist eine Abdeckung 4 angebracht, die in verschiedenen Ausführungsformen in den Figuren 1a bis 1f dargestellt ist.

Wie in der Figur 1a zu sehen ist, weist die Abdeckung 4 eine Nut 6 auf, die sich vollständig entlang des Umfangsrandes 8 erstreckt. Bezug nehmend auf die Figur 2 ist ein Querschnitt durch die Abdeckung 4 zu sehen im Bereich des Umfangsrandes 8, entlang der sich die Nut erstreckt. Die Nut 6 weist zwei Schenkelflächen 9 und 10 auf, wobei eine Schenkelfläche 10 einen Neigungswinkel aufweist, welcher dafür eingerichtet ist, das Licht der Leuchtdiode 2, welches auf diesen Schenkel 10 auftrifft, total zu reflektieren. Das reflektierte Licht tritt aus dem Umfangsrand 8 der Abdeckung 4 aus. Dieser Lichtanteil kann zur Beleuchtung einer seitlichen Umgebung der Leuchte dienen.

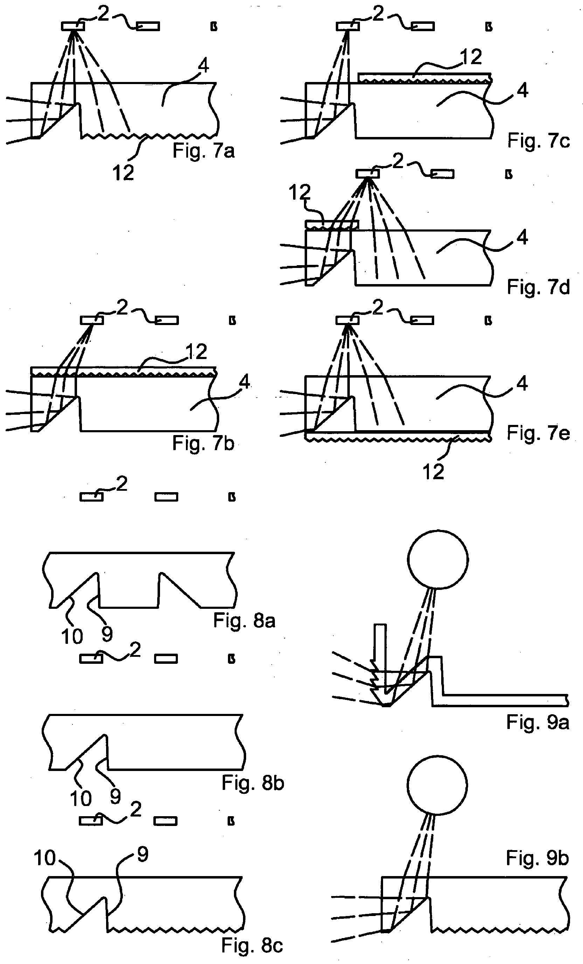

Die Figuren 1a bis 1 f zeigen verschiedene Ausführungsformen der Abdeckung. Die Nut kann, wie in Figur 1b dargestellt ist, auch innerhalb der Abdeckung angeordnet sein. Entsprechende Querschnitte durch die Abdeckung sind in den Figuren 8a bis 8c dargestellt. Bei diesen Ausführungsformen wird das an der Schenkelfläche 10 reflektierte Licht in der Art eines Lichtleiters durch die Abdeckung 4 transportiert, bis es an dem Umfangsrand austritt.

In den Figuren 1c und 1d sind Beispiele dargestellt, in welchen sich die Nut 4 entlang jeweils eines Teilbereichs des Umfangsrandes 8 der Abdeckung 4 erstreckt. Bei diesen Ausführungsformen wird der Lichtaustritt aus dem Umfangsrand 8 nur in Teilbereichen bewirkt.

Figur 1e zeigt eine Ausführungsform, in welcher mehrere Nuten 6 diagonal zu dem Umfangsrand 8 der Abdeckung 4 verlaufen. Bei dieser Ausführungsform wird ähnlich wie zur Figur 1b beschrieben, das Licht, welches an der Nut 6 reflektiert wird, durch die Abdeckung 4 in der Art eines Lichtleiters transportiert.

Figur 1f zeigt eine Ausführungsform einer Abdeckung 4, welche eine nicht-rechteckige Lichtaustrittsöffnung einer Leuchte abschließt. Es ist zu verstehen, dass die Abdeckungen 4 insbesondere rechteckig, kreisrund oder andere Formen aufweisen können.

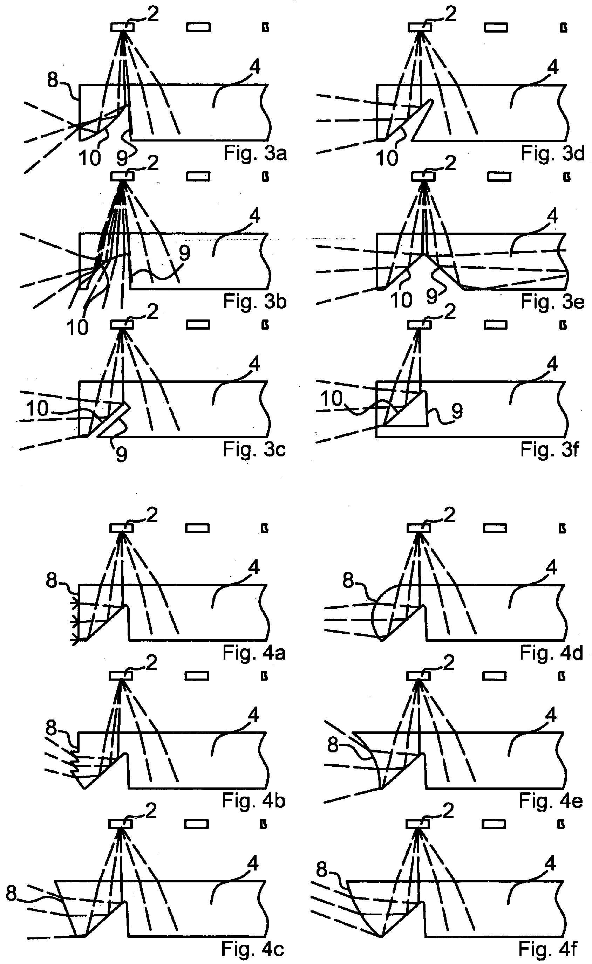

Bezug nehmend auf die Figuren 3a bis 3f sind verschiedene Ausführungsformen der Nut 6 dargestellt. Die Schenkelfläche 10, an welcher Totalreflexion stattfindet, kann eben ausgeführt sein, wie in Figuren 3c, 3d, 3e und 3f gezeigt. Die Schenkelfläche 10 kann auch konkav oder konvex gekrümmt sein, wie in Figuren 3a und 3b gezeigt. Bei diesen Ausführungsformen wird durch die Krümmung der Schenkelfläche 10 eine Aufweitung des aus dem Umfangsrand 8 austretenden Lichtbündels erzielt. Die Schenkelfläche 9, welche in der Nut 6 der Schenkelfläche 10 gegenüberliegt, trägt in der Ausführungsform nach Figur 3e ebenfalls zur Lichtlenkung bei. In dieser Ausführungsform ist die Schenkelfläche 9 etwa spiegelsymmetrisch zur Schenkelfläche 10 angeordnet und sorgt für eine Totalreflexion des auf sie auftreffenden Lichts in Richtung der Ebene der Abdeckung 4. In der Ausführungsform nach Figur 3c ist die Nut 6 als ein einfacher Schlitz mit parallelen Schenkelflächen 9 und 10 ausgebildet. Diese Ausführungsform lässt sich besonders einfach herstellen. In der Ausführungsform nach Figur 3f ist die Abdeckung 4 auf der dem Leuchtmittel gegenüberliegenden Seite geschlossen. In dieser Ausführungsform wird vorzugsweise die Nut 6 in die Abdeckung 4 eingeformt und anschließend wird die Abdeckung von der dem Leuchtmittel gegenüberliegenden Seite verschlossen.

Die Ausführungsformen gemäß den Figuren 4a bis 4f zeigen verschiedene Gestaltungen des Umfangsrandes 8. Bei der Ausführungsform nach Figur 4a ist auf dem Umfangsrand 8 eine lichtstreuende Beschichtung aufgebracht, welche dafür sorgt, dass das austretende Lichtbündel aufgeweitet wird. Die Ausführungsform nach Figur 4b besitzt Prismen an dem Umfangsrand 8, welche dafür sorgen, dass das austretende Licht in Richtung zu der Seite der Leuchtmittel, d.h. in Richtung zur Decke oder Wand bei einer Decken- oder Wandleuchte, abgelenkt wird. Die Ausführungsform nach Figur 4c besitzt einen keilförmig abgeschrägten Umfangsrand, der sinngemäß wie die Prismen in Figur 4b wirkt. Die Ausführungsformen nach Figur 4d bis 4f besitzen konvex oder konkav gekrümmte Umfangsränder 8, die eine Lichtbündelung oder eine Aufweitung oder eine Parallelisierung des den Umfangsrand 8 verlassenden Lichtbündels bewirken.

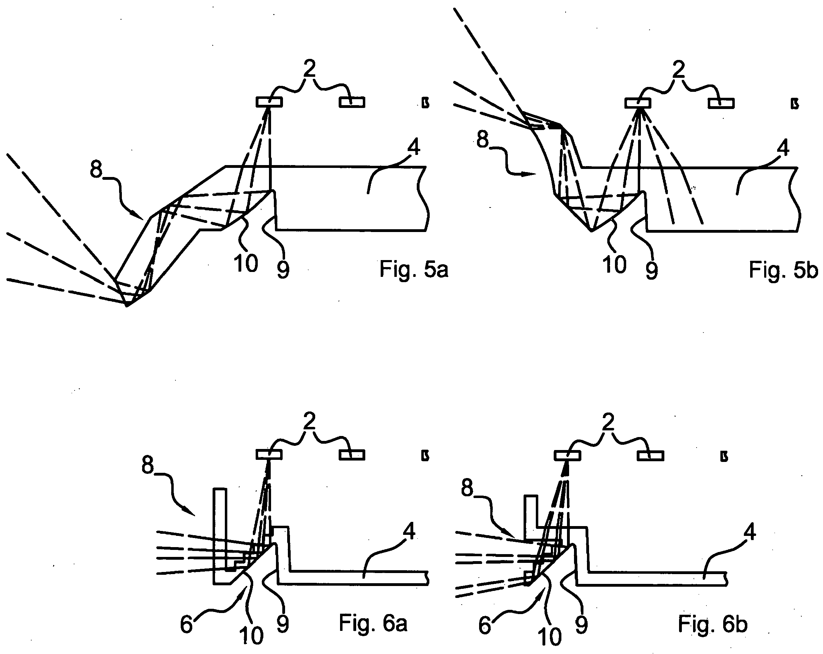

Die Vergleichsbeispiele in den Figuren 5a und 5b besitzen einen Umfangsrand mit mehreren Facetten, welche bei dem Beispiel nach Figur 5a eben sind und bei dem Beispiel nach Figur 5b teilweise gekrümmt sind. Das Lichtbündel, welches nach der Totalreflexion an der Schenkelfläche 10 in Richtung zum Umfangsrand umgelenkt wird, wird vor dem Austritt aus dem Umfangsrand noch zweifach reflektiert.

Die Figuren 6a und 6b zeigen Ausführungsformen von Abdeckungen 4, welche am Randbereich als abgewinkelte Platte ausgeführt ist. Bei diesen Ausführungsformen ist die Tiefe der Nut 6 größer als die Materialstärke der Abdeckung 4. Ferner sind bei diesen Ausführungsformen im Randbereich der Abdeckung 4 stufenförmige Prismen zur Lichtlenkung vorgesehen.

Die Ausführungsformen nach Figur 7a bis 7e besitzen eine Abdeckung 4, welche an der den Leuchtmitteln 2 zugewandten Oberfläche (siehe Figuren 7b bis 7d) oder auf der dem Leuchtmittel abgewandten Oberfläche (siehe Figuren 7a und 7e) eine lichtbrechende Struktur 12 aufweisen. Die lichtbrechende Struktur 12 ist bei der Ausführungsform von Figur 7a integral in der Oberfläche der Abdeckung integriert, während in den übrigen Ausführungsformen eine lichtbrechende Struktur 12 in Form einer Prismenfolie oder -platte auf die betreffende Oberfläche aufgebracht ist. Die lichtbrechende Struktur kann sich über jeweils die gesamte betreffende Oberfläche der Abdeckung 4 erstrecken oder sie ist auf den Bereich der Nut 6 beschränkt (siehe Figur 7d) oder sie erstreckt sich nur außerhalb des Bereichs der Nut 6 (siehe Figur 7c).

Die Figuren 8a bis 8c zeigen am Beispiel von Ausführungsformen, in welchen die Nut 6 nicht im Randbereich sondern in einem Bereich innerhalb der Abdeckung 4 angeordnet ist, wie beispielsweise auch in den Figuren 1b, 1e und 1 f dargestellt.

Die Figuren 9a und 9b zeigen Ausführungsformen mit alternativen Leuchtmitteln. Bei diesen Ausführungsformen ist eine röhrenförmige Leuchtstofflampe 2', deren Längserstreckung senkrecht zur Bildebene der Figuren liegt, oberhalb der Nuten 6 angeordnet. Andere Leuchtmittel, z.B. flächig angeordnete OLEDs, sind in Ausführungsformen der Erfindung auch möglich.

Bei der vorhergehenden Beschreibung bevorzugter Ausführungsformen ist zu verstehen, dass die Merkmale bezüglich der verschiedenen Ausführungsformen, insbesondere betreffend die Form und die Anordnung der Nut 6, die Form des Randbereiches 8 und die Art und die Anordnung der lichtbrechenden Strukturen 10 sowie die Leuchtmittel 2, 2' für verschiedene Ausführungsformen der Erfindung beliebig kombiniert werden können.

### Bezugszeichenliste:

- 2, 2': Leuchtmittel (LED; Leuchtstofflampe)
- 4: Abdeckung
- 6: Nut
- 8: Umfangsrand
- 9: Schenkelfläche
- 10: Schenkelfläche
- 12: lichtbrechende Struktur

## Patentansprüche

1. Decken- oder Wandleuchte mit wenigstens einem Leuchtmittel (2; 2') und einer transparenten Abdeckung (4), welche im Bereich einer Lichtaustrittsöffnung der Leuchte angeordnet ist und einen Umfangsrand (8) aufweist, welcher wenigstens teilweise die seitliche Begrenzung der Lichtaustrittsfläche definiert, wobei auf einer dem Leuchtmittel abgewandten Seite der Abdeckung eine zum Umfangsrand (8) der Abdeckung beabstandete Nut (6) vorgesehen ist, welche wenigstens zwei Schenkelflächen (9, 10) in dem Material der Abdeckung festlegt und wobei eine der Schenkelflächen (10) in einem Querschnitt senkrecht zur Längserstreckung der Nut gegenüber der dem Leuchtmittel (2; 2') zugewandten Oberfläche der Abdeckung (4) einen Neigungswinkel aufweist, der so bemessen ist, dass die Schenkelfläche (10) Licht, welches von dem Leuchtmittel (2; 2') durch die dem Leuchtmittel (2; 2') zugewandte Oberfläche der Abdeckung (4) auf die Schenkelfläche (10) auftritt, total reflektiert und in Richtung zum Umfangsrand (8) der Abdeckung (4) zur Aufhellung der Umgebung der Leuchte, in welcher die Leuchte eingebaut ist, umlenkt, **dadurch gekennzeichnet, dass** die Lichtstrahlung nach der Totalreflexion die Abdeckung (4) direkt durch den Umfangsrand (8) verlässt.

2. Leuchte nach Anspruch 1, wobei der Neigungswinkel gegenüber der dem Leuchtmittel (2; 2') zugewandten Oberfläche der Abdeckung (4) zwischen 21° und 72°, bevorzugt zwischen 40° und 50°, beträgt.

3. Leuchte nach einem der vorhergehenden Ansprüche, wobei die Nut (6) in besagtem Querschnitt ein Dreieck bildet, vorzugsweise mit einer abgerundeten Spitze.

4. Leuchte nach einem der vorhergehenden Ansprüche, wobei die Abdeckung (4) eine ebene Platte ist.

5. Leuchte nach einem der vorhergehenden Ansprüche, wobei die Nut (6) wenigstens zum Teil entlang des Umfangsrandes (8) verläuft.

6. Leuchte nach einem der vorhergehenden Ansprüche, wobei die Schenkelfläche (10) der Nut (6), an welcher Licht total reflektiert wird, eben, konkav gekrümmt oder konvex gekrümmt ist.

7. Leuchte nach einem der vorhergehenden Ansprüche, wobei der Umfangsrand (8) wenigstens zum Teil eben, konkav gekrümmt oder konvex gekrümmt ist.

8. Leuchte nach einem der vorhergehenden Ansprüche, wobei der Umfangsrand (8) mehrere Facetten aufweist.

9. Leuchte nach einem der vorhergehenden Ansprüche, wobei die dem Leuchtmittel (2; 2') zugewandte und/oder abgewandte Oberfläche der Abdeckung (4) wenigstens zum Teil mit einer lichtbrechenden Struktur (12), insbesondere mit Prismen, besetzt ist.

10. Leuchte nach einem der vorhergehenden Ansprüche, wobei die die Abdeckung durch den Umfangsrand (8) verlassende Lichtstrahlung wenigsten teilweise durch eine Fläche, die der seitlichen Verlängerung der dem Leuchtmittel zugewandten Oberfläche der Abdeckung entspricht, hindurchtritt.

11. Leuchte nach einem der vorhergehenden Ansprüche, wobei das wenigstens eine Leuchtmittel (2) eine flächige Anordnung von LEDs umfasst, wobei bevorzugt einige der LEDs entlang der Nut (6) angeordnet sind.

## Claims

1. Ceiling or wall light with at least one lighting means (2; 2') and a transparent cover (4), which is arranged in the region of a light exit opening of the light and comprises a peripheral edge (8) at least partially defines the lateral boundary of the light-emitting surface, wherein, on the side of the cover facing away from the lighting means, a groove (6) is provided at a distance from the peripheral edge (8) of the cover, which fixes at least two leg surfaces (9, 10) in the material of the cover, and wherein one of the leg surfaces (10), in a cross-section perpendicular to the longitudinal extension of the groove, opposite the surface of the cover (4) facing the lighting means (2, 2'), exhibits an inclination angle which is dimensioned in such a way that the leg surface (10) totally reflects light which emerges from the lighting means (2; 2') through the surface of the cover (4) facing the lighting means (2; 2') and impinges on the leg surface (10), and deflects it in the direction of the peripheral edge (8) of the cover (4) in order to illuminate the surroundings of the light in which the light is installed, **characterized in that** the light beam, after the total reflection, leaves the cover (4) directly through the peripheral edge (8).

2. Light according to claim 1, wherein the inclination angle opposite the surface of the cover (4) facing the lighting means (2; 2') amounts to between 21° and 72°, preferably between 40° and 50 °.

3. Light according to any one of the preceding claims, wherein the groove (6) in the said cross-section forms a triangle, preferably with a rounded tip.

4. Light according to any one of the preceding claims, wherein the cover (4) is a flat plate.

5. Light according to any one of the preceding claims, wherein the groove (6) runs at least in part along the peripheral edge (8).

6. Light according to any one of the preceding claims, wherein the leg surface (10) of the groove (6), at which light is totally reflected, is flat, cambered concave, or cambered convex.

7. Light according to any one of the preceding claims, wherein the peripheral edge (8) is at least in part flat, cambered concave, or cambered convex.

8. Light according to any one of the preceding claims, wherein the peripheral edge (8) comprises a plurality of facets.

9. Light according to any one of the preceding claims, wherein the surface of the cover (4) facing towards and/or away from the lighting means (2; 2') is at least in part occupied by a light refracting structure (12), in particular with prisms.

10. Light according to any one of the preceding claims, wherein the light beam leaving the cover through the peripheral edge (8) passed at least partially through a surface which corresponds to the lateral extension of the surface of the cover facing towards the lighting means.

11. Light according to any one of the preceding claims, wherein the at least one lighting means (2) comprises a surface arrangement of LED's, wherein preferably some of the LED's are arranged along the groove (6).

## Revendications

1. Luminaire de plafond ou mural avec au moins un moyen d'éclairage (2 ; 2') et un recouvrement (4) transparent qui est disposé dans la zone d'une ouverture de sortie de lumière du luminaire et présente un bord circonférentiel (8) qui définit au moins partiellement la limitation latérale de la surface de sortie de lumière, une encoche (6) espacée du bord circonférentiel (8) du recouvrement étant prévue sur un côté du recouvrement éloigné du moyen d'éclairage, et immobilise au moins deux surfaces de branche (9, 10) dans le matériau du recouvrement, et une des surfaces de branche (10) présentant, dans une section transversale perpendiculairement à l'étendue longitudinale de l'encoche par rapport à la surface du recouvrement (4) tournée vers le moyen d'éclairage (2 ; 2'), un angle d'inclinaison qui est dimensionné de telle sorte que la surface de branche (10) réfléchit totalement la lumière qui arrive sur la surface de branche (10) à partir du moyen d'éclairage (2 ; 2') en traversant la surface du recouvrement (4) tournée vers le moyen d'éclairage (2 ; 2'), et la dévie en direction du bord circonférentiel (8) du recouvrement (4) pour éclairer l'environnement du luminaire dans lequel est monté le luminaire, **caractérisé en ce que**, après la réflexion totale, le rayonnement lumineux quitte le recouvrement (4) directement à travers le bord circonférentiel (8).

2. Luminaire selon la revendication 1, l'angle d'inclinaison par rapport à la surface du recouvrement (4) tournée vers le moyen d'éclairage (2, 2') étant compris entre 21° et 72°, de préférence entre 40° et 50°.

3. Luminaire selon l'une des revendications précédentes, l'encoche (6) formant un triangle dans ladite section transversale, de préférence avec une pointe arrondie.

4. Luminaire selon l'une des revendications précédentes, le recouvrement (4) étant une plaque plane.

5. Luminaire selon l'une des revendications précédentes, l'encoche (6) courant au moins partiellement le long du bord circonférentiel (8).

6. Luminaire selon l'une des revendications précédentes, la surface de branche (10) de l'encoche (6) sur laquelle la lumière est réfléchie totalement étant plane, courbée de façon concave ou courbée de façon convexe.

7. Luminaire selon l'une des revendications précédentes, le bord circonférentiel (8) étant au moins partiellement plan, courbé de façon concave ou courbé de façon convexe.

8. Luminaire selon l'une des revendications précédentes, le bord circonférentiel (8) présentant plusieurs facettes.

9. Luminaire selon l'une des revendications précédentes, la surface du recouvrement (4) tournée vers le moyen d'éclairage (2 ; 2') et/ou éloignée du moyen d'éclairage (2 ; 2') étant occupée au moins partiellement par une structure (12) réfractant la lumière, en particulier avec des prismes.

10. Luminaire selon l'une des revendications précédentes, le rayonnement lumineux quittant le recouvrement à travers le bord circonférentiel (8) passant au moins partiellement à travers une surface qui correspond à la prolongation latérale de la surface du recouvrement tournée vers le moyen d'éclairage.

11. Luminaire selon l'une des revendications précédentes, le moyen d'éclairage (2) au moins au nombre de un comprenant une disposition étendue de LED, quelques-unes des LED étant de préférence disposées le long de l'encoche (6).
